# EUROPÄISCHE PATENTANMELDUNG

(11) **EP 2 000 516 A1**
(43) Veröffentlichungstag der Anmeldung: **10.12.2008**
(21) Anmeldenummer: 08157538.3
(22) Anmeldetag: 04.06.2008
(51) Int. Cl.: C09J 7/04

(54) **Gewebeklebeband**

(30) Priorität: 05.06.2007 DE 202007008003 U
(71) Anmelder: Coroplast Fritz Müller GmbH & Co. KG, 42279 Wuppertal (DE)
(72) Erfinder: Lodde, Christoph, 59439 Holzwickede (DE)
(74) Vertreter: Patentanwälte Dr. Solf & Zapf

(57) **Zusammenfassung**

Die Erfindung betrifft ein Klebeband, insbesondere ein Kabelwickelband für den Automobilbau, mit einem bandförmigen, aus Gewebe (3) bestehenden Träger (1), der mindestens auf einer Seite mit einer selbstklebenden Klebeschicht (2) versehen ist, die aus einem Haftklebstoff besteht. Insbesondere zur Verbesserung des Flaggingverhaltens und der Schmiegsamkeit des Bandes wird vorgeschlagen, dass durch eine Kombination der Zahl seiner Kettfäden (4) im Bereich von 20 bis 42 und seiner Schussfäden (5) im Bereich von 10 bis 22, eine Biegesteifigkeit des Trägers (1) von nicht mehr als 6 mN cm² eingestellt ist.

## Beschreibung

Die Erfindung betrifft ein Klebeband, insbesondere ein Kabelwickelband für den Automobilbau, mit einem bandförmigen, aus Gewebe bestehenden Träger, der mindestens auf einer Seite mit einer selbstklebenden Klebeschicht versehen ist.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern, als auch von verschiedenartigen Vliesklebebändern.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind.

Hinsichtlich der Abriebbeständigkeit ist in der LV 312 die in der nachstehenden Tabelle 1 wiedergegebene Klassifizierung vorgesehen.

**Tabelle 1: Einteilung der Abriebklassen nach LV 312**

| Abriebklasse | Anforderung (Anzahl Hübe) |
|---|---|
| A - kein Abriebschutz | < 100 |
| B - geringer Abriebschutz | 100 - 499 |
| C - mittlerer Abriebschutz | 500 - 999 |
| D - hoher Abriebschutz | 1000 - 4999 |
| E - sehr hoher Abriebschutz | 5000 und mehr |

Als weitere anwendungstechnisch wichtige Prüfungen sind in der genannten Richtlinie beispielsweise auch Prüfmethoden für die thermische Beständigkeit, die Kompatibilität von Klebebändern mit elektrischen Fahrzeugleitungen sowie für die Chernikalienbeständigkeit, das Geräuschdämpfungsverhalten, das Fogging- sowie für das Flagging-Verhalten beschrieben. Unter Flagging versteht man dabei eine Ablösung insbesondere spiralförmig um einen Kabelsatz gewickelter Bänder, so dass deren Enden abstehen und, um dies zu vermeiden, jeweils beim Einsatz fixiert werden müssen. Dies wirkt sich nachteilig auf die Verarbeitungszeit aus.

Die unterschiedlichen Anforderungen verhalten sich teilweise hinsichtlich bestimmter Basisgrößen des Klebebandes, wie z. B. der Dicke, konträr zueinander. So ist - vorausgesetzt andere Basisgrößen, wie das Trägermaterial, bleiben konstant - bei einem Klebeband mit zunehmender Dicke zwar mit einer höheren Abriebfestigkeit, aber auch mit einer verringerten Flexibilität und einer Verschlechterung des Flagging-Verhaltens zu rechnen. Um unterschiedlichen Beanspruchungen in der Praxis gerecht zu werden, wurden daher zahlreiche technische Lösungen für Klebebänder vorgeschlagen, bei denen in der Regel einer, teilweise auch zwei oder mehr, der geforderten Eigenschaften besondere Bedeutung beigemessen wurde, während andere Eigenschaften als weniger bedeutsam in den Hintergrund traten.

So beschreibt die DE 298 23 462 U1 ein Klebeband mit einem bandförmigen, als Verbund aus mindestens einer ersten textilen Schicht und aus einer zweiten textilen Schicht ausgebildeten Träger. Bei diesem Klebeband ist in seinem Eigenschaftsbild insbesondere die Abriebbeständigkeit von Relevanz, welche der Klasse E zugeordnet werden kann. Im Detail wird eine Schutzummantelung beschrieben, die sich aus einem inneren Faservlies und aus einem äußeren Velours zusammensetzt. Das bekannte Band ist nicht maschinell verarbeitbar und zeigt am Kabelsatz ein Flagging, so dass seine Enden jeweils beim Einsatz fixiert werden müssen.

Aus der DE 20 2005 013 009 U1 ist ein ähnliches Klebeband bekannt, das einen textilen Träger aus zumindest einer Gewebeschicht und einer damit verbundenen Flächengebildeschicht und eine ein- oder beidseitig auf den Träger aufgebrachte Klebebeschichtung aufweist, wobei die Gewebeschicht als Feingewebeschicht mit mehr als 25 Fäden/cm in Längs- und Querrichtung ausgebildet ist. Neben einer ähnlich vorteilhaft hohen Abriebfestigkeit weist das bekannte Band aber auch ähnlich nachteilhafte Eigenschaften wie das vorstehend beschriebene auf.

Den genannten Klebändern ist mit ähnlichen anderen Bändern gemeinsam, dass sie Verbundmaterialien mit einer Velours- oder Vlieslage im Trägermaterial darstellen, womit eine entsprechend hohe Banddicke, insbesondere eine Dicke von mehr als 0,8 mm, verbunden ist. Außerdem sind diese bekannten Bänder - wie bereits erwähnt - nicht maschinell verarbeitbar und zeigen nach dem Bewickeln eines Kabelsatzes oftmals die erwähnten Ablöseerscheinungen an ihren Enden, so dass sich neben der hohen Banddicke auch hohe Verarbeitungszeiten ergeben. Der Einsatz von Trägern mit hohen Flächengewichten ist generell problematisch, insbesondere bei einem Einsatz als Kabelwickelband, da diese Träger aufgrund ihrer Steifigkeit besonders anfällig für Flagging-Erscheinungen sind. Wirkt man jedoch dem Flagging durch Verwendung stark haftender Klebstoffe entgegen, so kann dies beim Abrollen von auf sich selbst gewickelten Bändern ohne zusätzliche Trennbeschichtung zu Faserausrissen auf der Rückseite führen, was wiederum einen starken Klebkraftverlust und sogar die Zerstörung des Trägers herbeiführen kann.

Demgegenüber ist mit Klebebändern der eingangs genannten Art, wie z. B. mit Gewebeklebebändern auf Zellwoll- oder PET-Basis, die nicht als Verbundmaterial aufgebaut sind und die daher eine geringere Dicke, insbesondere eine Dicke von weniger als 0,5 mm, aufweisen, nur eine vergleichsweise geringe Abriebfestigkeit erzielbar. Ein derartiges Klebeband ist in der DE 10 2004 028 825 A1 beschrieben, welche sich auf ein technisches Klebeband mit einem bandförmigen textilen gefärbten Träger und mit einer ein- oder beidseitig aufgetragenen, aus einem Haftklebstoff bestehenden Klebebeschichtung bezieht. Für das bekannte Klebeband ist dabei eine spezielle Farbgebung charakteristisch, nämlich, dass der textile Träger aus spinndüsengefärbten Fäden oder Fasern besteht. Die bekannten Bänder der eingangs genannten Art bestehen in der Regel zwar den in Prüfrichtlinie LV 312 vorgeschriebenen Test des Flaggingverhaltens, jedoch treten in der Praxis trotzdem an spiralförmig bewickelten Kabelbäumen vereinzelt Ablöseerscheinungen der Klebebandenden auf.

Der vorliegenden Erfindung liegt die Aufgabe zugrunde, ein Klebeband der eingangs genannten Art zu schaffen, das manuell und maschinell leicht verarbeitbar ist, das bei Vorhandensein eines verrottungsfesten Trägers schmiegsam und flexibel ist, ein im Vergleich mit Klebebändern gemäß dem Stand der Technik verbessertes Flagging-Verhalten zeigt und mindestens einen mittleren Abriebwiderstand sowie - bei geringer Dicke und der Möglichkeit, ohne Interliner auf sich selbst gewickelt zu werden - eine der Anwendung angepasste Klebkraft erreicht.

Erfindungsgemäß wird dies dadurch erreicht, dass durch eine Anzahl von Kettfäden im Gewebe des Trägers im Bereich von 20 bis 42 je cm und eine Anzahl von Schussfäden im Gewebe des Trägers im Bereich von 10 bis 22 je cm eine Biegesteifigkeit des Trägers von nicht mehr als 6 mN cm² eingestellt ist.

Ein solches erfindungsgemäßes Klebeband ist deutlich schmiegsamer als die eingangs beschriebenen bekannten Klebebänder - sowohl diejenigen mit mehrschichtigem, als auch diejenigen mit einschichtigem Trägeraufbau - hat eine weitaus geringere Neigung zum Flagging und kann schneller verarbeitet werden. Die Vorteilhaftigkeit der Erfindung zeigt sich dabei im Besonderen, wenn der Träger aus einem verrottungsfesten textilen Träger, wie beispielsweise aus Polyester-Gewebe besteht, wodurch insbesondere neben der angestrebten Abriebfestigkeit auch eine hohe Reissfestigkeit gewährleistet werden kann. Aufgrund dieser Eigenschaften eignet sich ein erfindungsgemäßes Klebeband ausgezeichnet zum Umwickeln von Kabelsätzen.

Das erfindungsgemäße Klebeband kann dabei insbesondere eine geringe Dicke, d. h. eine Dicke von weniger als 0,22 mm, vorzugsweise eine Dicke im Bereich von 0,19 bis 0,21 mm, aufweisen. Hierbei ist es in bevorzugter Ausführung der Erfindung von Vorteil, wenn der Träger eine Biegesteifigkeit von nicht mehr als 5 mN cm², vorzugsweise von nicht mehr als 4 mN cm², aufweist.

Für Polyester-Gewebe-Träger können erfindungsgemäß besonders bevorzugt Fadenkonstruktionen (40/20, 40/15) mit 40 Kettfäden und mit mehr als 10, insbesondere mit 20 oder 15 Schussfäden je cm eingesetzt werden, während im Vergleich dazu eine marktübliche Fadenkonstruktion (45/25), die seit etwa zehn Jahren serienmäßig als PET-Gewebe-Träger eingesetzt wird, 45 Kettfäden und 25 Schussfäden je cm aufweist. Mit den genannten Fadenkonstruktionen können die in Tabelle 2 wiedergegebenen Werte der Biegesteifigkeit eingestellt werden.

**Tabelle 2: Vergleich der Biegesteifigkeiten**

| Gewebe | Biegesteifigkeit in mN * cm² |
|---|---|
| 45/25 | 6,5 - 8,9 |
| 40/20 | 4,5 - 5,5 |
| 40/15 | 3,0 - 4,0 |

Die Biegesteifigkeit wird dabei gemäß Norm DIN 53 362 bestimmt. Je geringer die Biegesteifigkeit des Trägers ist, umso schmiegsamer ist das Klebeband. Daraus ergibt sich insbesondere bei der Applikation "Spiralbewicklung" auch eine vorteilhaft geringere Neigung zum Flagging.

Wie des Weiteren aus Tabelle 3 hervorgeht, können dabei vorteilhafterweise für die erfindungsgemäßen und für die erfindungsgemäß besonders bevorzugt einsetzbaren Fadenkonstruktionen (40/20, 40/15) bei Einsatz von Polyester als Fadenmaterial vorteilhafterweise nicht nur mittlere, sondern auch hochklassige Abriebeigenschaften eingestellt werden.

**Tabelle 3: Vergleich der Abriebfestigkeiten**

| Gewebe | Abriebfestigkeit | | | |
|---|---|---|---|---|
| | 5-mm-Dorn | | 10-mm-Dorn | |
| | Hübe | Klasse | Hübe | Klasse |
| 45/25 | 1100-1342 | D | 1300-2000 | D |
| 40/20 | 515-585 | C | 1038-1364 | D |
| 40/15 | 338-433 | B | 618-821 | C |

**Tabelle 4: Gewebekonstruktionen**

| Merkmal | Einheit | Eigenschaft / Messwert |
|---|---|---|
| Trägermaterial | - | PET-Gewebe |
| Garn/Faserart | - | Polyester |
| Färbung | - | Stückgefärbt (spinndüsengefärbtes Garn-/Fadenmaterial) |
| Flächengewicht | g/m² | ≤110 |
| Kette | | |
| - Fadenanzahl | 1/cm | 20 - 42 (40) |
| - Garnstärke | dtex | 84 - 300 (167) |
| - Garnmaterial | - | glatt, texturiert oder |
| - | | texturiert/intermingelt |
| - Filamentanzahl | Anzahl | 24 - 48 (36) |
| Schuss | | |
| - Fadenanzahl | 1/cm | 10 - 20 |
| | | (15±1, 20±1) |
| - Garnstärke | dtex | 84 - 300 (167) |
| - Garnmaterial | - | glatt, texturiert oder |
| - | | texturiert/intermingelt |
| - Filamentanzahl | Anzahl | 24 - 48 (36) |

Im Allgemeinen sind erfindungsgemäß die in der vorstehenden Tabelle 4 aufgeführten Gewebekonstruktionen für einen Einsatz als Trägermaterial prädestiniert.

Weitere vorteilhafte Ausgestaltungsmerkmale der Erfindung sind in den Unteransprüchen sowie der folgenden Beschreibung enthalten.

Anhand eines Vergleichsbeispiels und zweier, durch die beiliegende Zeichnung veranschaulichter erfindungsgemäßer Ausführungsbeispiele wird die Erfindung näher erläutert.

Dabei zeigen:
- Fig. 1: eine Querschnittsdarstellung des Aufbaus eines erfindungsgemäßen Klebebandes,
- Fig. 2: in einer Draufsicht, eine schematisierte Darstellung des im Prozess seiner Herstellung entstehenden Gewebeaufbaus eines Trägers eines erfindungsgemäßen Klebebandes,
- Fig. 3: im Querschnitt, eine weitere prinzipielle Darstellung zum Gewebeaufbau eines Trägers eines erfindungsgemäßen Klebebandes.

In den Figuren der Zeichnung sind gleiche Teile stets auch mit den gleichen Bezugszeichen versehen, so dass sie in der Regel auch jeweils nur einmal beschrieben werden.

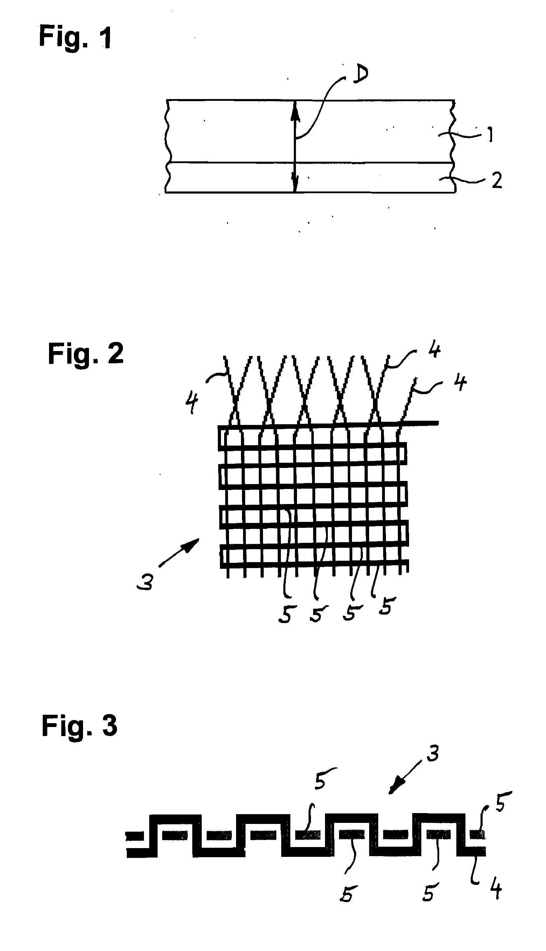

Wie zunächst Fig. 1 veranschaulicht, umfasst ein erfindungsgemäßes Klebeband, insbesondere ein Kabelwickelband für den Automobilbau, einen bandförmigen, aus Gewebe bestehenden Träger 1, der mindestens auf einer Seite mit einer selbstklebenden Klebeschicht 2 versehen ist, die aus einem Haftklebstoff besteht.

Ein bevorzugter Anwendungsfall des erfindungsgemäßen Klebebandes stellt dabei das Umwickeln von Kabelsätzen dar, wobei aus mehreren, jeweils mit einer Isolierung versehenen, insbesondere elektrischen, Leitungen durch ein zumindest teilweises Umwickeln - beispielsweise an nicht isolierten Stellen der Leitungen - mit dem erfindungsgemäßen Klebeband ein Kabelbaum, insbesondere für die Automobilindustrie, gebildet werden kann.

Eine bevorzugte Dicke D des erfindungsgemäßen Klebebandes beträgt weniger als 0,22 mm und liegt insbesondere in einem Bereich von 0,16 bis 0,21 mm. Der Träger 1 kann dabei ein spezifisches Flächengewicht von weniger als 110 g/m², insbesondere ein spezifisches Flächengewicht im Bereich von 70 bis 105 g/m², vorzugsweise von 98 bis 102 g/m², aufweisen, während die Klebeschicht 2, welche aus einem Synthesekautschuk, insbesondere aus einem Acrylatklebstoff, vorzugsweise aus einem UV-vernetzbaren Acrylatklebstoff, bestehen kann, mit einem spezifischen Flächengewicht von etwa 40 bis 100 g/m², vorzugsweise von etwa 70 bis 90 g/m², aufgetragen sein kann.

Das Gewebe des Trägers 1 ist in Fig. 2 und 3 mit dem Bezugszeichen 3 gekennzeichnet. Erfindungsgemäß ist vorgesehen, dass durch die Beschaffenheit des Gewebes 3 eine Biegesteifigkeit des Trägers 1 von nicht mehr als 6 mN cm² und eine Abriebfestigkeit eingestellt ist, bei der das Klebeband an einem Dorn mit 10 mm Durchmesser mindestens die Abriebklasse C gemäß LV 312 erfüllt.

Bevorzugte Werte sind dabei - wie auch aus der nachfolgenden tabellarischen Übersicht (Tabelle 5) hervorgeht, eine Biegesteifigkeit des Trägers 1 von nicht mehr als 5 mN cm², vorzugsweise von nicht mehr als 4 mN cm², und eine Abriebfestigkeit gemäß LV 312, bei der das erfindungsgemäße Klebeband auch bei Prüfung mit einem Dorn mit 5 mm Durchmesser mindestens die Abriebklasse C erfüllt.

Das erfindungsgemäße Klebeband kann ohne Verwendung eines Interliners auf sich selbst zu einer Rolle und davon wieder herunter gewickelt werden, ohne dass es dabei zu einem Herausziehen der Fäden 4, 5 des Gewebes 3 käme.

Des Weiteren ist erfindungsgemäß vorgesehen, dass die Anzahl der Kettfäden - in Fig. 2 und 3 mit dem Bezugszeichen 4 bezeichnet - im Gewebe 3 des Trägers 1 im Bereich von 20 bis 42 je cm liegt, vorzugsweise größer ist als 25 je cm und besonders bevorzugt bei 40 je cm liegt. Letzteres gilt für beide der dargestellten erfindungsgemäßen Beispiele.

Die Anzahl der Schussfäden - in Fig. 2 und 3 mit dem Bezugszeichen 5 bezeichnet - liegt im Gewebe 3 des Trägers 1 im Bereich von 10 bis 22 je cm, vorzugsweise bei 15 ± 1 je cm (Beispiel III in Tabelle 5) oder 20 ± 1je cm (Beispiel II in Tabelle 5).

Bei dem vergleichsweise dargestellten Band (Beispiel I in Tabelle 5) handelt es sich insbesondere um eine Standardqualität, die unter dem Namen "Coroplast 8310 SE" im Handel ist.

Bei dem Vergleichsbeispiel liegt die Anzahl der Kettfäden bei 45 je cm und die Anzahl der Schussfäden bei 25 je cm. Dies sowie auch alle weiteren unterscheidenden Parameter der Beispiele gehen aus Tabelle 5 hervor.

Was die Klebkraft des erfindungsgemäßen Klebebandes betrifft, so kann diese aufgrund der erfindungsgemäß geringen Biegesteifigkeit und hohen Schmiegsamkeit an den bevorzugten Anwendungsfall, insbesondere auch an eine manuelle Applikation des Bandes, angepasst und nicht so hoch eingestellt werden, dass es zu den eingangs erwähnten Problemen käme. So kann die Klebkraft auf dem Bandrücken im Bereich von > 2,0 N/cm, insbesondere im Bereich von 5,5 bis 8,0 N/cm, vorzugsweise im Bereich von 6,0 bis 6,5 N/cm, liegen, während sie auf Stahl Werte im Bereich von > 3,0 N/cm, insbesondere 5,5 bis 7,5 N/cm, annehmen kann. Die Abrollkraft des erfindungsgemäßen Klebebandes liegt bevorzugt im Bereich von 2,0 bis 9,0 N/cm. Der dafür einsetzbare Klebstofftyp ist in allen Beispielen ein Synthesekleber, für den in der Tabelle 5 jeweils die Abkürzung SK steht.

Hinsichtlich der mechanischen Eigenschaften ist festzustellen, dass das erfindungsgemäße Klebeband nicht quereinreißbar ist und insbesondere eine Reißdehnung im Bereich von 20 bis 35 %, vorzugsweise von 24 bis 30 % sowie eine Bruchkraft im Bereich von 210 bis 250 N/cm, vorzugsweise im Bereich von 225 bis 236 N/cm aufweisen kann.

**Tabelle 5: Vergleich der Klebebandstrukturen und -eigenschaften**

| Eigenschaft | Einheit | I | II | III |
|---|---|---|---|---|
| Material Gewebe 3 | - | PET | PET | PET |
| Gewicht Träger 1 | g/m² | 127-134 | 100-105 | 95-100 |
| Zahl Kettfäden 4 | 1/cm | 44-47 | 40-41 | 40-41 |
| Zahl Schussfäden 5 | 1/cm | 24-27 | 20 | 15 |
| Klebstofftyp | - | SK | SK | SK |
| Kleberauftrag | g/m² | 85-95 | 80-85 | 80-85 |
| Banddicke D | Mm | 0,25-0,26 | 0,21- 0,22 | 0,21- 0,22 |
| Reißdehnung | % | 35-40 | 26-30 | 24-27 |
| Bruchkraft | N/cm | 270-315 | 230-240 | 225-236 |
| Klebkraft | | | | |
| auf Stahl | N/cm | 4,2-5,6 | 8,0-9,0 | 7,5-8,5 |
| auf Bandrücken | N/cm | 2,3-5,3 | 5,5-6,5 | 6,0-7,0 |
| Abrollkraft | N/19 mm | 2,2-6,5 | 2,7-5,7 | 4,3-5,7 |
| Flagging | | | | |
| 30 min | - | nein | Nein | nein |
| 24 h | - | nein | Nein | nein |
| Abrieb | | | | |
| mit 5-mm-Dorn | | | | |
| Minimum | Hübe | 1100 | 515 | 338 |
| Maximum | Hübe | 1342 D | 585 | 433 |
| Klasse | - | | C | B |
| mit 10-mm-Dorn | | | | |
| Minimum | Hübe | 1300 | 1038 | 618 |
| Maximum | Hübe | 2000 | 1364 | 821 |
| Klasse | - | D | D | C |

Die Ermittlung der in Tabelle 5 als Basisdaten eines erfindungsgemäßen Klebebandes angegebenen technischen Parameter erfolgte nach den jeweils üblichen Normen: EN ISO 2286-1 für das spezifische Gewicht des Trägers 1, DIN EN 1942 für die Dicke D, DIN EN 14410 für die mechanischen Werte, DIN EN 1939 (Stand 11/1996) für die Klebkraft und DIN EN 1944 für die Abrollkraft des Klebebandes. Das Flaggingverhalten und die Abriebbeständigkeit wurden nach LV 312 bestimmt.

Generell sind unter der Beschaffenheit des Gewebes, durch die die erfindungsgemäße Biegesteifigkeit und Abriebfestigkeit des Trägers 1 einstellbar ist, alle Merkmale zu subsumieren, die Eigenschaft und Qualität eines Gewebes 3 des Trägers 1 beeinflussen. Dies sind das Fadenmaterial - bzw. bei Fasermischungen eventuell mehrere Materialien - mit seinen/ihren typischen Eigenschaften, die Art des Garns, die z. B. Feinheit, Gleichmäßigkeit, den Filamentaufbau und gegebenenfalls eine Texturierung/Intermingelung umfasst, die Bindungsart des Gewebes 3, also die Art, wie die Kettfäden 4 und Schussfäden 5 miteinander verkreuzt werden, die Dichte des Gewebes 3, also die Anzahl der Kett- und Schussgarne pro cm², die sich durch Multiplikation der längenbezogenen Zahlen der Kettfäden 4 und Schussfäden 5 ergibt. Hierzu wird insbesondere auf Tabelle 4 verwiesen. Außerdem kann auch eine zusätzliche Behandlung und/oder Ausrüstung, wie eine Imprägnierung, Kalandrierung oder Prägung die Beschaffenheit des Gewebes 3 mitbestimmen.

Kettfäden 4 und/oder Schussfäden 5 können - zumindest teilweise, verstanden in Bezug auf ihre Anzahl, aber auch in Bezug auf bestimmte Abschnitte ihrer Länge - glatt und/oder texturiert und/oder intermingelt sein, Letzteres - insbesondere in Kombination mit der Texturierung.

Die Erfindung ist nicht auf die beschriebenen Ausführungsbeispiele beschränkt, sondern umfasst auch alle im Sinne der Erfindung gleichwirkenden Ausführungen. So fällt auch ein Klebeband mit doppelseitiger Beschichtung des Trägers 1 in den Bereich der Erfindung. Es ist sowohl bevorzugt möglich, den Träger 1 aus einem spinndüsengefärbten Garn- bzw. Fadenmaterial herzustellen, als auch einer Dispersionsfärbung zu unterwerfen.

Der Fachmann kann die Erfindung auch durch weitere vorteilhafte technische Maßnahmen ergänzen, ohne dass der Rahmen der Erfindung verlassen wird. So fördert beispielsweise eine Kalandrierung des Trägers 1 eine Verringerung der Permeabilität des Gewebes 3 für den Klebstoff. Auch bei eventuell während der Auftragung der Klebeschicht 2 vorhandener geringerer Viskosität des Klebstoffs kommt es so bei der erfindungsgemäß vorgesehenen - im Vergleich mit bekannten Klebebändern geringeren - Dichte des Gewebes 3 - es handelt sich bei den dargestellten erfindungsgemäßen Beispielen um mittelschwere Polyestergewebe - nicht zu einem Klebstoffdurchschlag durch den Träger 1.

Die in Fig. 2 und 3 beispielhaft dargestellte Bindungsart des Gewebes 3 ist eine Leinwand- oder Leinenbindung, die als Ur- oder Stammbindung aller Gewebebindungen gilt. Da die Leinwandbindung die engste Verkreuzung von Kette und Schuss darstellt, in der alle vier vorhandenen Bindungspunkte sich berühren, ist diese erfindungsgemäß bevorzugt. Grundsätzlich erscheint jedoch auch der Einsatz anderer Bindungsarten möglich, wenn damit erfindungsgemäß erreicht werden kann, dass die Biegesteifigkeit des Trägers von nicht mehr als 6 mN cm² beträgt und eine Abriebfestigkeit eingestellt ist, bei der das Klebeband an einem Dorn mit 10 mm Durchmesser mindestens die Abriebklasse C gemäß LV 312 erfüllt. Hier ist insbesondere die Atlasbindung zu nennen, die alternativ zur oder in Kombination mit der Leinenbindung eingesetzt werden kann.

Unter dem Aspekt einer technologisch wirtschaftlichen Fertigung ist auch unter Verweis auf Fig. 2 zu erwähnen, dass der technologische Fertigungsaufwand des Gewebes 3 zur Erhöhung der Anzahl der Schussfäden 5 höher liegt als der zur Erhöhung der Kettfäden 4, da die eingesetzten Webmaschinen bei höherer Schusszahl langsamer arbeiten müssen. Die Erzielung einer vorteilhaft geringen Dichte des Gewebes 3 im sollte sich daher im erfindungsgemäß als optimal angesehenen Bereich von 600 bis 800 Fäden pro cm² mit Vorteil eher auf eine verringerte Anzahl von Schussfäden 5 als auf eine verringerte Anzahl von Kettfäden 4 stützen.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: Träger
- 2: Klebeschicht
- 3: Gewebe von 1
- 4: Kettfaden
- 5: Schussfaden

- D: Banddicke

## Patentansprüche

1. Klebeband, insbesondere Kabelwickelband für den Automobilbau, mit einem bandförmigen, aus Gewebe (3) bestehenden Träger (1), der mindestens auf einer Seite mit einer selbstklebenden Klebeschicht (2) versehen ist, die aus einem Haftklebstoff besteht,
**dadurch gekennzeichnet, dass** durch eine Anzahl von Kettfäden (4) im Gewebe (3) des Trägers (1) im Bereich von 20 bis 42 je cm und eine Anzahl von Schussfäden (5) im Gewebe (3) des Trägers (1) im Bereich von 10 bis 22 je cm eine Biegesteifigkeit des Trägers (1) von nicht mehr als 6 mN cm² eingestellt ist.

2. Klebeband nach Anspruch 1,
**dadurch gekennzeichnet , dass** der Träger (1) eine Biegesteifigkeit von nicht mehr als 6 mN cm², vorzugsweise von nicht mehr als 4 mN cm², aufweist.

3. Klebeband nach Anspruch 1 oder 2,
**dadurch gekennzeichnet , dass** die Abriebfestigkeit gemäß LV 312 an einem Dorn mit 5 mm und/oder an einem Dorn mit 10 mm Durchmesser mindestens die Abriebklasse C erfüllt.

4. Klebeband nach einem der Ansprüche 1 bis 3,
**gekennzeichnet durch** eine Dicke (D) von weniger als 0,22 mm, insbesondere eine Dicke (D) im Bereich von 0,16 bis 0,21 mm.

5. Klebeband nach einem der Ansprüche 1 bis 4,
**dadurch gekennzeichnet , dass** der Träger (1) ein spezifisches Flächengewicht von weniger als 110 g/m², insbesondere ein spezifisches Flächengewicht im Bereich von 70 bis 105 g/m², vorzugsweise von 98 bis 102 g/m², aufweist.

6. Klebeband nach einem der Ansprüche 1 bis 5,
**dadurch gekennzeichnet , dass** die Anzahl der Kettfäden (4) im Gewebe (3) des Trägers (1)größer ist als 25 je cm und bevorzugt bei 40 je cm liegt.

7. Klebeband nach einem der Ansprüche 1 bis 6,
**dadurch gekennzeichnet, dass** die Anzahl der Schussfäden (5) im Gewebe (3) des Trägers (1) größer ist als 10 je cm und bevorzugt bei 15 je cm oder 20 je cm, liegt.

8. Klebeband nach einem der Ansprüche 1 bis 7,
**dadurch gekennzeichnet , dass** die Garnstärke der Kettfäden (4) und/oder der Schussfäden (5) im Bereich von 84 bis 300 dtex liegt und vorzugsweise 167 dtex beträgt.

9. Klebeband nach einem der Ansprüche 1 bis 8,
**dadurch gekennzeichnet , dass** das Garn der Kettfäden (4) und/oder der Schussfäden (5) aus 24 bis 48 Filamenten, vorzugsweise aus 36 Filamenten, gebildet ist.

10. Klebeband nach einem der Ansprüche 1 bis 9,
**gekennzeichnet durch** eine Reißdehnung im Bereich von 20 bis 35 %, vorzugsweise von 24 bis 30 %.

11. Klebeband nach einem der Ansprüche 1 bis 10,
**gekennzeichnet durch** eine Bruchkraft im Bereich von 210 bis 250 N/cm, vorzugsweise im Bereich von 225 bis 236 N/cm.

12. Klebeband nach einem der Ansprüche 1 bis 11,
**dadurch gekennzeichnet , dass** der Haftklebstoff der selbstklebenden Klebeschicht (2) ein Synthesekautschuk, insbesondere ein Acrylatklebstoff, vorzugsweise ein UV-vernetzbarer Acrylatklebstoff, ist.

13. Klebeband nach einem der Ansprüche 1 bis 12,
**dadurch gekennzeichnet , dass** der Haftklebstoff in der Klebeschicht (2) mit einem spezifischen Flächengewicht von etwa 40 bis 100 g/m², vorzugsweise von etwa 70 bis 90 g/m², aufgetragen ist.

14. Klebeband nach einem der Ansprüche 1 bis 13,
**dadurch gekennzeichnet , dass** die Klebkraft auf dem Bandrücken im Bereich von 2,0 bis 8,0 N/cm, vorzugsweise im Bereich von 6,0 bis 6,5 N/cm, liegt.

15. Klebeband nach einem der Ansprüche 1 bis 14,
**dadurch gekennzeichnet, dass** die Klebkraft auf Stahl im Bereich von 3,0 bis 9,0 N/cm, vorzugsweise im Bereich von 8,0 bis 8,5 N/cm, liegt.

16. Klebeband nach einem der Ansprüche 1 bis 15,
**dadurch gekennzeichnet , dass** die Abrollkraft im Bereich von 2,0 bis 9,0 N/cm liegt.

17. Klebeband nach einem der Ansprüche 1 bis 16,
**dadurch gekennzeichnet , dass** das Gewebe (3) des Trägers (1) aus Polyester, insbesondere aus PET, besteht.

18. Klebeband nach einem der Ansprüche 1 bis 17,
**dadurch gekennzeichnet , dass** das Gewebe (3) des Trägers (1) durch Kalandrieren verdichtet ist.

19. Klebeband nach einem der Ansprüche 1 bis 18,
**dadurch gekennzeichnet, dass** das Gewebe (3) des Trägers (1) eine Leinwandbindung und/oder eine Atlasbindung aufweist.

20. Klebeband nach einem der Ansprüche 1 bis 19,
**dadurch gekennzeichnet , dass** Kettfäden (4) und/oder Schussfäden (5), zumindest teilweise, glatt und/oder texturiert und/oder intermingelt sind.
